# NOUVEAU FASCICULE DE BREVET EUROPEEN

(11) **EP 1 359 082 B2**
(45) Date de publication et mention de la décision concernant l'opposition: **25.02.2009**
(45) Mention de la délivrance du brevet: 03.11.2004
(21) Numéro de dépôt: 03290739.6
(22) Date de dépôt: 24.03.2003
(51) Int. Cl.: B62D 1/184

(54) **Dispositif d'ajustement de position d'une colonne de direction réglable de véhicule automobile**
Positionsanpassungseinrichtung einer einstellbaren Kraftfahrzeuglenksäule
Position adjustment device of a motor vehicle steering column

(30) Priorité: 29.04.2002 FR 0205592
(43) Date de publication de la demande: 05.11.2003
(73) Titulaire: NACAM France S.A., 41000 Vendome (FR)
(72) Inventeur: Gauchenot, Benjamin, 41000 Blois (FR); Sauquet, Mickael, 41100 Saint Ouen (FR)
(74) Mandataire: Cabinet Bloch & Gevers

(56) Documents cités:
- EP-A- 0 836 981
- EP-A- 1 170 194
- EP-A2- 0 341 078
- EP-B1- 0 836 981
- WO-A2-01/81149
- DE-C1- 10 031 721
- FR-B1- 2 787 842

## Description

La présente invention se rapporte à un dispositif d'ajustement de position d'une colonne de direction réglable d'un véhicule automobile selon le préambule de la revendication 1 connu du document EP-A-0 836 981. Le dispositif selon l'invention s'applique à une colonne de direction réglable en profondeur ou en inclinaison ou bien à une colonne de direction réglable en profondeur et en inclinaison. La colonne de direction comporte un arbre de direction, qui est monté dans un tube-corps et qui porte le volant de direction ; ledit tube-corps étant supporté et bloqué sur la structure du véhicule à la position voulue.

Les différents types connus de colonne de direction réglables en position comportent un système de serrage avec deux positions : une position verrouillée et une position déverrouillée. En position verrouillée, la colonne de direction est bloquée en position, et en position déverrouillée, la colonne de direction est débloquée afin de pouvoir effectuer le réglage de position demandé de ladite colonne.

En position déverrouillée, il faut qu'il y ait un jeu de fonctionnement suffisant pour permettre le coulissement correct de la colonne de direction par rapport à la structure du véhicule. Les colonnes de direction connues présentent alors l'un des deux types d'inconvénients ci-après : soit le jeu de fonctionnement est trop faible, et les manoeuvres de réglage du volant de direction sont difficiles à exécuter par le conducteur ; soit le jeu de fonctionnement est trop grand, et il se produit un basculement apparent du volant de direction, qui est mal ressenti et préoccupant pour le conducteur.

Le but de la présente invention est de proposer un dispositif d'ajustement de position d'une colonne de direction réglable d'un véhicule automobile qui évite les inconvénients décrits ci-dessus. Le dispositif d'ajustement selon l'invention devra permettre d'obtenir un jeu de fonctionnement maîtrisé entre la colonne de direction et la structure du véhicule lors du réglage, tout en donnant toute garantie sur le maintien en position, lorsque le système de serrage de la colonne est en position verrouillée.

De plus, le dispositif d'ajustement de position devra s'intégrer facilement dans l'encombrement des colonnes de direction existantes.

L'invention se rapporte à un dispositif d'ajustement de position d'une colonne de direction de véhicule automobile selon la revendication 1. La colonne est constituée par un arbre de direction monté tournant autour d'un axe de direction dans un tube-corps. Ledit tube-corps est relié à un ensemble support fixé à la structure du véhicule. Ladite colonne de direction est réglable en hauteur et/ou en profondeur, avec un système de serrage suivant un axe de serrage, qui est sensiblement perpendiculaire au plan vertical passant par l'axe de direction.

L'ensemble des liaisons entre ledit tube-corps et l'ensemble support est constitué par un mécanisme latéral, par rapport au plan vertical de l'axe de direction, qui est monté sur un montant latéral de l'ensemble support. Ledit mécanisme latéral comprend un système anti-rotation suivant l'axe de serrage, et un système anti-rotation suivant l'axe de direction. Les deux systèmes anti-rotation permettent d'obtenir une liaison de type encastrement entre le tube-corps et le montant latéral de l'ensemble support, lorsque le système de serrage est en position verrouillée.

Le mécanisme latéral comprend également un système de réglage du jeu de coulissement suivant l'axe de direction entre le mécanisme latéral et le tube-corps de manière à éviter tout basculement apparent, lorsque le système de serrage est en position déverrouillée ; ledit système de réglage du jeu étant intégré audit système de serrage, et étant commandé par le système de serrage.

Avantageusement selon l'invention, le système anti-rotation suivant l'axe de serrage et le système anti-rotation suivant l'axe de direction sont un seul et même système anti-rotation qui consiste en un élément d'appui coopérant avec le tube-corps. Ledit élément d'appui a un profil transversal par rapport à l'axe de direction qui coopère avec un profil conjugué qui est aménagé sur ledit tube-corps, l'élément d'appui étant disposé entre le tube-corps et le montant latéral, et l'élément d'appui étant relié audit montant latéral.

Dans cette configuration de l'invention, une réalisation particulièrement intéressante consiste en ce que l'élément d'appui comporte deux faces d'appui qui sont inclinées l'une par rapport à l'autre, qui sont parallèles à l'axe de direction, et qui sont disposées de part et d'autre d'un plan de serrage passant l'axe de serrage et perpendiculaire au plan vertical de l'axe de direction. Lesdites faces d'appui coopèrent respectivement avec deux faces de contact ayant un profil conjugué, qui sont aménagées sur le tube-corps, lesdites faces de contact ayant la même inclinaison par rapport au plan vertical de l'axe de direction que lesdites faces d'appui, et étant parallèles audit axe de direction.

Selon un mode de réalisation de l'invention, le système de serrage comprend :
- une tige de serrage dont l'axe est l'axe de serrage, tous les autres éléments du système de serrage sont montés sur ladite tige de serrage qui traverse le tube-corps, l'élément d'appui, le montant latéral ainsi que tous les autres éléments ;
- un ensemble de blocage, qui est disposé contre la face externe du montant latéral ;
- un levier de manoeuvre entraînant en rotation l'ensemble de blocage par rapport à l'axe de serrage;
- une équerre de serrage, qui est disposée contre la face interne du tube-corps ;
- une tête de serrage, qui est aménagée à l'extrémité interne de la tige de serrage, et qui vient s'appliquer contre l'équerre de serrage ;
- un élément de serrage, qui est aménagé à l'extrémité externe de la tige de serrage de manière à bloquer, dans le sens de l'axe de serrage, le tube-corps sur le montant latéral, lorsque le système de serrage est en position verrouillée.

Selon l'invention, le système de réglage du jeu de coulissement coopère avec l'ensemble de blocage, ce qui permet d'utiliser l'encombrement du système de serrage.

Dans cette réalisation :
- l'ensemble de blocage comprend une came fixe en rotation par rapport à l'axe de serrage, et une came mobile en rotation par rapport à l'axe de serrage et solidaire du levier de manoeuvre ;
- le système de réglage du jeu de coulissement comprend un élément de réglage monté sur la tige de serrage, ledit élément de réglage étant manoeuvrable afin d'ajuster sa position axiale par rapport à la came fixe, de manière qu'en position déverrouillée du système de serrage, il y ait le jeu demandé entre chacune des deux faces d'appui de l'élément d'appui et la face de contact correspondante du tube-corps.

Dans cette structure de l'invention :
- le tube-corps comporte un élément latéral constitué par deux portions inclinées qui sont reliées par une portion de raccordement sensiblement verticale, chaque portion inclinée comporte une face externe qui est la face de contact correspondante, et la portion de raccordement est munie d'un trou oblong de passage de la tige de serrage, qui est parallèle à l'axe de direction ;
- l'élément d'appui comporte une portion d'appui sensiblement verticale qui s'applique contre le montant latéral, et dont chaque extrémité verticale se termine par une portion inclinée qui comporte une face interne qui est la face d'appui correspondante, ladite portion d'appui ayant un trou de passage de la tige de serrage ;
- le montant latéral comporte un trou oblong de passage de la tige de serrage, qui est sensiblement perpendiculaire au plan de serrage ;
- l'équerre de serrage possède deux faces inclinées qui s'appliquent contre les faces internes des portions inclinées correspondantes du tube-corps;
- l'équerre de serrage possède une empreinte de forme hexagonale, qui coopère avec une forme hexagonale de la tête de serrage pour permettre le blocage en position verrouillée.

Dans cette structure de l'invention
- la tige de serrage a une tête de serrage intégrée,
- la tige de serrage a une portion externe filetée, de manière à recevoir l'élément de réglage qui est constitué par un écrou ou une rondelle se fixant automatiquement, qui est réglable en position déverrouillée, et de manière à recevoir l'élément de serrage qui est constitué par un écrou de serrage bloqué en position verrouillée.

Selon une variante de réalisation de l'invention:
- la tige de serrage comporte un anneau intégré qui constitue l'élément de réglage ;
- la tige de serrage a une extrémité interne filetée qui reçoit un écrou constituant la tête de serrage ;
- la tige de serrage a une extrémité externe filetée avec une empreinte de manoeuvre agencée transversalement au bout de ladite extrémité, ladite empreinte permettant le réglage de la tête de serrage par rapport audit anneau en position déverrouillée,
- l'extrémité externe filetée reçoit l'élément de serrage qui est constitué par un écrou de serrage bloqué en position verrouillée.

Dans cette structure de l'invention, il peut être agencé un ressort, qui est disposé entre l'élément de réglage et la came fixe ET/ou la came mobile, afin de supprimer totalement le jeu de fonctionnement avec un effort de réglage contrôlé.

Le dispositif d'ajustement en position d'une colonne de direction selon l'invention présente ainsi l'avantage d'éviter tout phénomène de basculement apparent du volant de direction, lorsque le système de serrage est en position déverrouillée. Le dispositif de l'invention présente également l'avantage d'avoir une liaison de type encastrement entre le tube-corps et le montant latéral de l'ensemble support lié à la structure du véhicule, lorsque le système de serrage est en position verrouillée. De plus, le système de réglage du jeu de coulissement coopère avec l'ensemble de blocage, en utilisant l'encombrement du système de serrage, ce qui offre l'avantage d'éviter tout encombrement supplémentaire.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective du dispositif d'ajustement en position d'une colonne de direction selon l'invention ;
- la figure 2 est une vue suivant II de la figure 1 ;
- la figure 3 est une coupe transversale suivant le plan III-III de la figure 2 ;
- la figure 4 est vue de détail de la tige de serrage représentée sur la figure 3 avec les écrous montés à ses extrémités ;
- la figure 5 est une vue en perspective de l'équerre de serrage représentée sur la figure 3 avec l'écrou correspondant ;
- la figure 6 est une vue éclatée en perspective des différents éléments du dispositif selon l'invention avec une autre réalisation de la tige de serrage et de l'élément de réglage ;
- la figure 7 est une coupe transversale analogue à la figure 3, suivant un plan perpendiculaire au plan de serrage et passant par l'axe de serrage de la figure 6, le système de serrage étant en position verrouillée ; et
- la figure 8 est une coupe transversale analogue à la figure 7, le système de serrage étant en position déverrouillée.

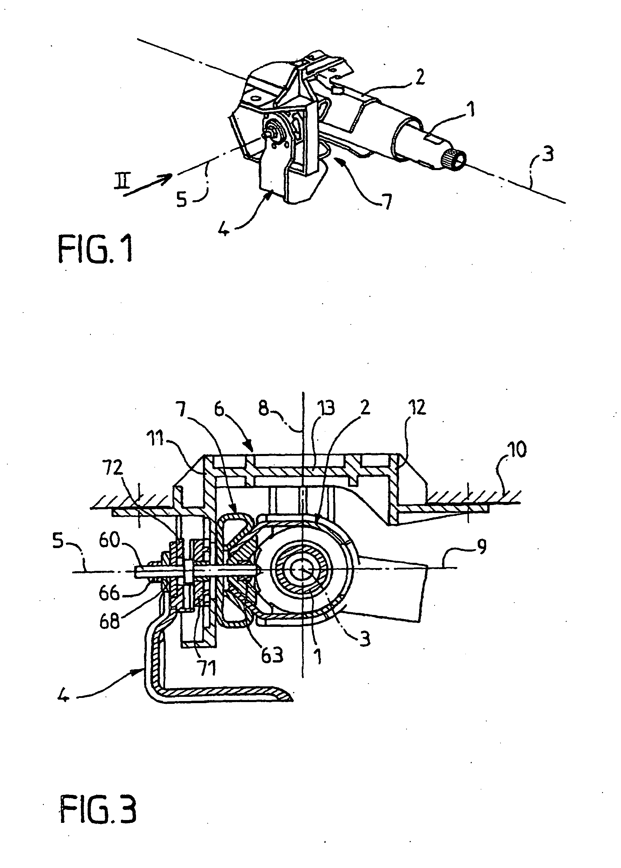

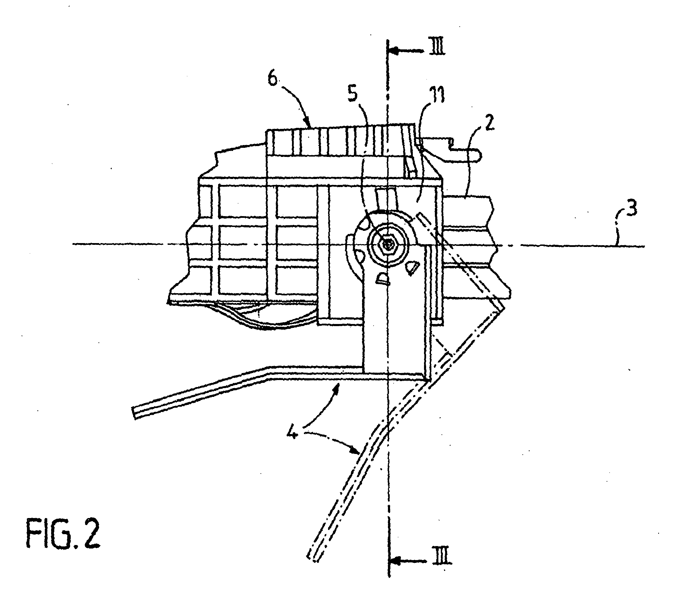

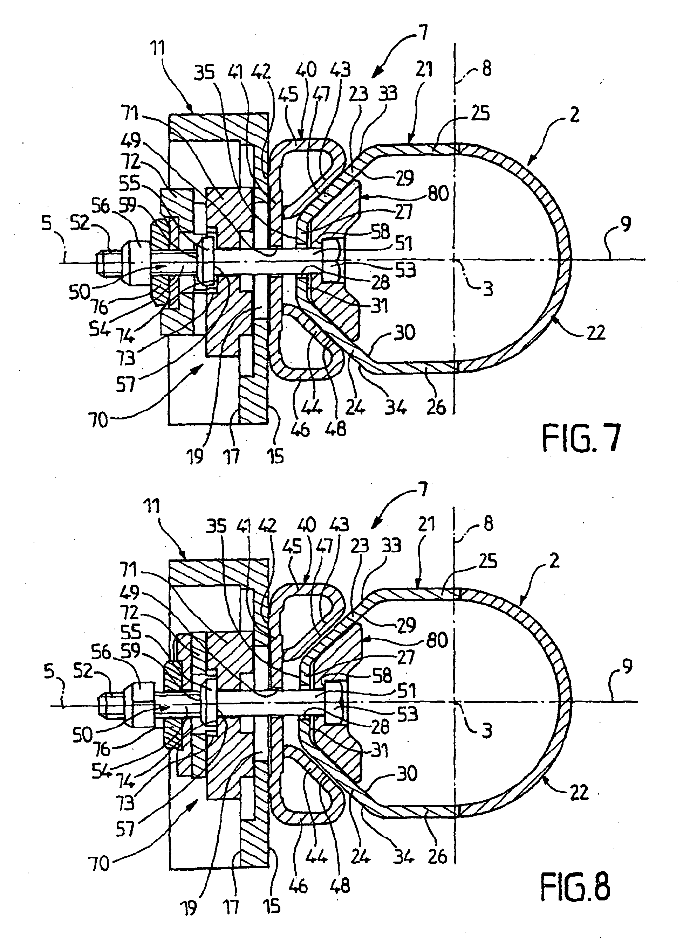

Comme on peut le voir sur les figures 1 à 3, 7 et 8, l'invention se rapporte à un dispositif d'ajustement de position d'une colonne de direction réglable d'un véhicule automobile. La colonne de direction comprend un arbre de direction 1, qui est monté tournant autour d'un axe de direction 3. L'arbre de direction 1 est monté tournant dans un tube-corps 2. Ledit tube-corps 2 est disposé entre deux montants latéraux 11 et 12, qui sont reliés par un élément de raccordement 13. Les deux montants latéraux 11, 12 et l'élément de raccordement 13 constituent un élément support, qui fait partie d'un ensemble support 6. L'ensemble support 6 est fixé à la structure 10 du véhicule. La colonne de direction est réglable en inclinaison ou en profondeur, ou en inclinaison et en profondeur.

Le tube-corps 2 est relié à l'ensemble support 6 par un système de réglage en position en hauteur ou en profondeur ou en hauteur et en profondeur.

La colonne de direction comporte un système de serrage 4, qui permet d'avoir la position verrouillée et la position déverrouillée de ladite colonne de direction.

Le système de serrage 4 est disposé et agit suivant un axe de serrage 5, qui est sensiblement perpendiculaire au plan vertical 8 passant par l'axe de direction 3.

Les deux montants latéraux 11 et 12 de l'ensemble support 6 sont sensiblement verticaux, c'est-à-dire qu'ils sont sensiblement parallèles au plan vertical 8 passant par l'axe de direction 3.

Dans la suite de la description et pour un même élément, on appellera interne ou intérieur par rapport à l'axe de direction 3 ou par rapport au plan vertical 8, ce qui est le plus près de cet axe de direction 3 ou de ce plan vertical 8, et externe ou extérieur ce qui est le plus éloigné.

Ainsi, le montant latéral 11 a une face interne 15 et une face externe 17 par rapport à l'axe de direction 3, ou par rapport au plan vertical 8. La face interne 15 et la face externe 17 sont sensiblement parallèles au plan vertical 8.

De plus, le montant 11 possède un trou oblong 19 qui est orienté dans le sens du réglage en hauteur du système de réglage en position.

Le dispositif de réglage en position est bloqué à la position choisie par le système de serrage 4. L'axe de serrage 5 est également sensiblement perpendiculaire au montant latéral 11 de l'ensemble support 6. Le dispositif de serrage a deux positions : une position déverrouillée dans laquelle le dispositif de serrage est débloqué pour permettre le réglage demandé de la colonne de direction, et une position verrouillée dans laquelle le dispositif de serrage est bloqué pour garantir lé maintien de la position choisie.

Dans le mode de réalisation de l'invention représenté sur les différentes figures, l'axe de serrage 5 traverse le tube-corps 2 au voisinage de l'axe de direction 3. Le plan, passant par l'axe de serrage 5 et l'axe de direction 3, est appelé plan de serrage 9 ; ce plan de serrage 9 est sensiblement perpendiculaire au plan vertical 8.

Comme on peut le voir sur les figures 3 à 8, l'ensemble des liaisons entre ledit tube-corps 2 et l'ensemble support 6 est constitué par un mécanisme latéral 7 par rapport au plan vertical 8 de l'axe de direction 3, c'est-à-dire qu'il est disposé entièrement d'un seul côté du plan vertical 8.

Le mécanisme latéral 7 est ainsi monté sur le montant latéral 11 de l'ensemble support 6.

Selon l'invention, le mécanisme latéral 7 comprend des systèmes anti-rotation afin d'assurer le blocage en position verrouillée, et un système de réglage du jeu de coulissement en position déverrouillée.

Un système anti-rotation est agencé suivant l'axe de serrage 4, et un système anti-rotation est agencé suivant l'axe de direction 3. Les deux systèmes anti-rotation permettent d'obtenir une liaison de type encastrement entre le tube-corps 2 et le montant latéral 11 de l'ensemble support 6, lorsque le système de serrage 4 est en position verrouillée.

Le système de réglage du jeu de coulissement est réalisé suivant l'axe de direction 3 entre le mécanisme latéral 7 et le tube-corps 2 de manière à éviter tout basculement apparent, lorsque le système de serrage 4 est en position déverrouillée. De plus, le système de réglage du jeu est intégré audit système de serrage 4, et il est commandé par ledit système de serrage 4.

Le système anti-rotation suivant l'axe de serrage 5 et le système anti-rotation suivant l'axe de direction 3 sont un seul et même système anti-rotation. Ledit système anti-rotation unique est constitué par un élément d'appui 40 qui coopère avec le tube-corps 2. Cet élément d'appui 40 a un profil transversal par rapport à l'axe de direction 3 qui coopère avec un profil conjugué qui est aménagé sur ledit tube-corps 2. L'élément d'appui 40 est disposé entre le tube-corps 2 et la face interne 15 du montant latéral 11. De plus, l'élément d'appui 40 est relié audit montant latéral 11.

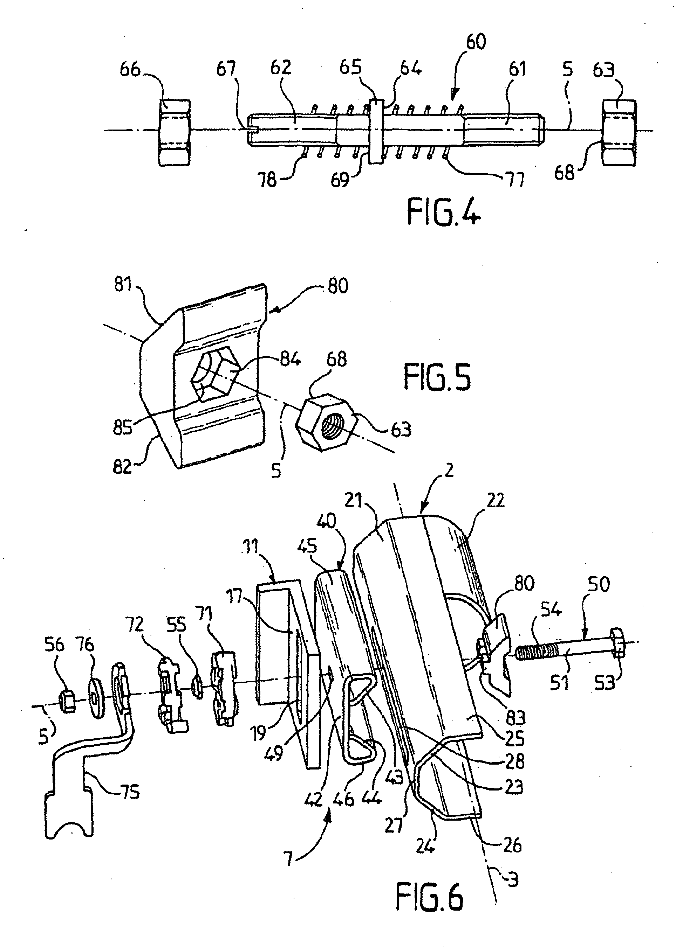

Comme cela est représenté sur les figures 6 à 8, le tube-corps 2 comporte un élément latéral 21 et un élément latéral 22, qui sont disposés approximativement de part et d'autre du plan vertical 8.

Dans un plan transversal par rapport à l'axe de direction 3, l'élément latéral 22 a une forme sensiblement demi-circulaire, et l'élément latéral 21 a une forme constituée de plusieurs parties droites.

L'élément latéral 21 comporte deux portions inclinées 23 et 24 qui sont reliées par une portion de raccordement 27 sensiblement verticale. Les deux portions inclinées 23 et 24 sont disposées symétriquement par rapport au plan de serrage 9. Chaque portion inclinée 23 et 24 se prolonge respectivement par une portion d'extrémité 25 et 26 qui se raccorde à l'élément latéral 22. Les portions d'extrémité 25 et 26 sont sensiblement perpendiculaires au plan vertical 8.

La portion de raccordement 27 est munie d'un trou oblong de passage 28 du système de serrage 4, qui est parallèle à l'axe de direction 3, ce qui permet le réglage en profondeur du système de réglage en position. La portion inclinée 23 a une face interne 29 et une face externe de contact 33, qui sont parallèles à l'axe de direction 3. La portion inclinée 24 a une face interne 30 et une face externe de contact 34, qui sont également parallèles à l'axe de direction 3. La portion de raccordement 27 a une face interne 31 et une face externe 35, qui sont aussi parallèles à l'axe de direction 3.

L'élément d'appui 40 comporte une portion d'appui 41 sensiblement verticale, dont chaque extrémité verticale se termine par une portion inclinée 43 et 44. La portion d'appui 41 est reliée à la portion inclinée 43 par une portion de raccordement 45, et à la portion inclinée 44 par une portion de raccordement 46. Les deux portions inclinées 43 et 44 ainsi que les deux portions de raccordement 45 et 46 sont disposées symétriquement par rapport au plan de serrage 9. La portion d'appui est munie d'un trou de passage 49 du système de serrage 4. La portion d'appui 41 a une face externe 42, sensiblement verticale, qui s'applique contre la face interne 15 du montant latéral 11. La portion inclinée 43 a une face interne d'appui 47, qui est parallèle à l'axe de direction 3. La portion inclinée 44 a une face interne d'appui 48, qui est parallèle à l'axe de direction 3.

Le système de serrage 4 permet de monter le tube-corps 2 contre l'élément d'appui 40 qui s'applique contre le montant latéral 11. La face externe de contact 33 et la face interne d'appui 47 sont disposées avec le même inclinaison par rapport au plan de serrage 9, ainsi que la face externe de contact 34 et la face interne d'appui 48 qui leur sont symétriques par rapport audit plan de serrage 9.

Ainsi, l'élément d'appui 40 comporte deux faces internes d'appui 47, 48 qui sont inclinées l'une par rapport à l'autre, qui sont parallèles à l'axe de direction 3, et qui sont disposées de part et d'autre d'un plan de serrage 9 passant l'axe de serrage 5 et l'axe de direction 3 et perpendiculaire au plan vertical 8 de l'axe de direction 3. Lesdites faces internes d'appui 47, 48 coopèrent respectivement avec deux faces externes de contact 33, 34 ayant un profil conjugué, qui sont aménagées sur le tube-corps 2, lesdites faces externes de contact 33, 34 ont la même inclinaison par rapport au plan vertical 8 de l'axe de direction 3 que lesdites faces internes d'appui 47, 48, et sont parallèles audit axe de direction 3.

Cette architecture du dispositif de l'invention permet aux faces externes de contact 33 et 34 du tube-corps 2 de venir s'appliquer parfaitement contre les faces internes d'appui 47 et 48 de l'élément d'appui 40, lorsque le système de serrage est en position bloquée. Du fait que ces différentes faces sont droites et inclinées par rapport au plan de serrage 9, elles empêchent toute rotation du tube-corps 2 par rapport à l'axe de serrage 5 et par rapport à l'axe de direction 3.

Un premier mode de réalisation du système de serrage 4 est représenté sur les figures 6 à 8, et comporte une tige de serrage 50 dont l'axe est l'axe de serrage 4.

Un deuxième mode de réalisation du système de serrage 4 est représenté sur les figures 3 et 4, et comporte une tige de serrage 60 dont l'axe est l'axe de serrage 4.

Dans ces deux modes de réalisation, tous les autres éléments du système de serrage 4 sont montés sur et traversés par la tige de serrage 50 ou 60 correspondante, qui traverse également le tube-corps 2 par le trou oblong de passage 28, l'élément d'appui 40 par le trou de passage 49, et le montant latéral 11 par le trou oblong de passage 19.

Les autres éléments du système de serrage 4 consistent en :
- un ensemble de blocage 70, qui est disposé contre la face externe 17 du montant latéral 11 ;
- un levier de manoeuvre 75 entraînant en rotation l'ensemble de blocage 70 par rapport à l'axe de serrage 5 ;
- une butée à aiguilles 76 disposée contre la face externe du levier de manoeuvre 75 ;
- une équerre de serrage 80, qui est disposée contre les faces internes 29 et 30 du tube-corps 2 ;
- une tête de serrage, qui est aménagée à l'extrémité interne de la tige de serrage 50 ou 60 et qui vient s'appliquer contre l'équerre de serrage 80;
- un élément de serrage, qui est aménagé à l'extrémité externe de la tige de serrage 50 ou 60 de manière à bloquer, dans le sens de l'axe de serrage 5, le tube-corps 2 sur le montant latéral 11 par l'intermédiaire de l'élément d'appui 40, lorsque le système de serrage 4 est en position verrouillée.

Comme cela est représenté plus précisément sur la figure 5 et sur les figures 6 à 8, l'équerre de serrage 80 comporte deux faces inclinées 81 et 82, qui sont orientées de manière à venir s'appliquer respectivement contre les faces internes 29 et 30 des portions inclinées correspondantes 23 et 24 du tube-corps 2. L'équerre de serrage 80 est munie d'une empreinte hexagonale 84 avec un fond 85, et éventuellement d'un tenon 83, représenté sur la figure 6, qui s'engage et coulisse dans le trou oblong de passage 28.

L'ensemble de blocage 70 comprend une came fixe 71 et une came mobile 72. La came fixe 71 s'applique contre la face externe 17 du montant latéral 11, et est fixe en rotation par rapport à l'axe de serrage 5. La came mobile 72 est solidaire du levier de manoeuvre 75, et est mobile en rotation par rapport à l'axe de serrage 5.

Le système de réglage du jeu de coulissement est intégré au système de serrage 4 et il est commandé par ledit système de serrage 4. Pour être réalisé, le système de réglage du jeu de coulissement coopère avec la came fixe 71 de l'ensemble de blocage 70 ; et il est disposé et agencé sur la tige de serrage correspondante 50 ou 60.

Le système de réglage du jeu de coulissement comprend un élément de réglage monté sur la tige de serrage 50 ou 60, ledit élément de réglage étant manoeuvrable afin d'ajuster sa position axiale par rapport à la came fixe 71, de manière qu'en position déverrouillée du système de serrage, il y ait le jeu demandé entre chacune des deux faces internes d'appui 47, 48 de l'élément d'appui 40 et la face externe de contact 33, 34 correspondante du tube-corps 2.

Dans le premier mode de réalisation du système de serrage 4, la tige de serrage 50 a une extrémité interne 51 avec une tête de serrage 53 intégrée et une extrémité externe filetée 52 qui se prolonge par une portion externe filetée 54. La tête de serrage 53 a une section de forme hexagonale, qui coopère avec l'empreinte hexagonale 84 de l'équerre de serrage 80 pour permettre le blocage en position verrouillée.

Le système de réglage du jeu de coulissement comprend un élément de réglage qui est constitué par écrou de réglage 55. Cet écrou de réglage 55 est réglable sur la portion externe filetée 54 pour venir buter contre le fond 74 d'un logement 73 aménagé sur la face externe de la came fixe 71, lorsque le système de serrage 4 est en position déverrouillée avec le jeu de coulissement demandé entre les faces externes de contact 33, 34 et les faces internes d'appui 47, 48. L'élément de serrage est constitué par un écrou de serrage 56, qui se déplace sur l'extrémité externe filetée 52 et/ou sur la portion externe filetée 54 pour se bloquer contre la butée à aiguilles 76, lorsque le système de serrage 4 est en position verrouillée.

Dans une variante de réalisation, l'écrou de réglage 55 est remplacé par une rondelle se fixant automatiquement sur une partie lisse de la tige de serrage 50.

De plus, un ressort 77 et/ou 78 peut être disposé entre l'écrou de réglage 55 ou la rondelle et la face externe de la came fixe 71, et/ou la face interne de la came mobile 72 afin de supprimer totalement le jeu de fonctionnement lors du coulissement avec un effort de réglage en position contrôlé.

Dans le deuxième mode de réalisation du système de serrage 4 représenté sur les figures 3, 4 et 5, la tige de serrage 60 a une extrémité interne filetée 61, une extrémité externe filetée 62, et une partie centrale avec un élément de réglage intégré, constitué par un anneau de positionnement 65. L'extrémité interne filetée 61 reçoit un écrou de serrage 63 constituant la tête de serrage, et dont la section hexagonale coopère avec l'empreinte 84 de l'équerre de serrage 80, pour permettre le blocage en position verrouillée. Le système de réglage du jeu de coulissement comprend l'anneau de positionnement 65 et une empreinte de manoeuvre 67 agencée transversalement au bout de ladite extrémité externe filetée 62.

L'empreinte 67 permet de tourner la tige de serrage 60, afin de régler la distance entre la tête de serrage constituée par l'écrou de serrage 63 et l'anneau de positionnement 65, dont la face interne 64 vient buter contre le fond 74 du logement 73 aménagé sur la face externe de la came fixe 71, lorsque le système de serrage 4 est en position déverrouillée avec le jeu de coulissement demandé entre les faces externes de contact 33, 34 et les faces internes d'appui 47, 48.

L'élément de serrage est constitué par un écrou de serrage 66, qui se déplace sur la portion externe filetée 62 pour se bloquer contre la butée à aiguilles 76, lorsque le système de serrage est en position verrouillée.

De plus, un ressort 77 et/ou 78 peut être disposé entre l'anneau de positionnement 65 et la face externe de la came fixe 71, et/ou la face interne de la came mobile 72 afin de supprimer totalement le jeu de fonctionnement lors du coulissement avec un effort de réglage en position contrôlé.

Ainsi le tube-corps 2 est lié au montant latéral 11 par un mécanisme latéral 7, qui permet deux positions de fonctionnement : la position verrouillée et la position déverrouillée. La position verrouillée permet d'obtenir une liaison de type encastrement entre le montant latéral 11 et le tube-corps 2. La position déverrouillée permet d'obtenir un jeu maîtrisé entre le montant latéral 11 et le tube-corps 2. Ce jeu maîtrisé autorise le mouvement vertical et axial du tube-corps par rapport au montant latéral 11 en évitant tout basculement apparent du volant de direction. Ce jeu est réglé en utilisant la partie filetée de la même tige de serrage 50 ou 60 que pour le système de serrage 4.

Pour obtenir la position verrouillée, le verrouillage est réalisé par la rotation de la came mobile 72 par rapport à la came fixe 71, qui génère un mouvement axial positif de la tige de serrage 50 ou 60. Dans cette position, l'ensemble de blocage 70, l'écrou de serrage 56 ou 66, la tige de serrage 50 ou 60, le montant latéral 11, l'élément d'appui 40, le tube-corps 2, l'équerre de serrage 80 sont en contrainte suivant l'axe de serrage 5. Dans cette position, le mouvement du tube-corps 2 par rapport au montant latéral 11, sous un effort compatible avec les contraintes liées à ce type de produit, n'est pas possible. Dans cette position, il existe un jeu entre l'écrou de réglage 55 ou l'anneau de positionnement 65 et la came fixe 71.

Pour obtenir la position déverrouillée, le déverrouillage est réalisé par la rotation de la came mobile 72 par rapport à la came fixe 71, qui génère un mouvement axial négatif de la tige de serrage 50 ou 60. Dans cette position, l'ensemble de blocage 70, l'écrou de serrage 56 ou 66, la tige de serrage 50 ou 60, le montant latéral 11, l'élément d'appui 40, le tube-corps 2, l'équerre de serrage 80 ne sont plus en contrainte suivant l'axe de serrage 5. Les faces de glissement du montant latéral 11 et du tube-corps 2 permettent alors d'autoriser un mouvement relatif vertical et axial de ces deux pièces. Dans cette position, le jeu entre l'écrou de réglage 55 ou l'anneau de positionnement 65 et la came fixe 71 est rattrapé. L'écrou de réglage 55 ou l'anneau de positionnement 65 constitue alors la butée, suivant l'axe de serrage 5, du tube-corps 2, de l'élément d'appui 40, de l'équerre de serrage 80, de la tige de serrage 50 ou 60 et de la came fixe 71. L'ajustement de la position de l'écrou de réglage 55 ou de l'anneau de positionnement 65 permet de libérer les contraintes de la liaison tube-corps 2/montant latéral 11 sans induire de rotation, c'est-à-dire de basculement relatif de ces éléments.

## Revendications

1. Dispositif d'ajustement de position d'une colonne de direction de véhicule automobile, ladite colonne de direction étant constituée par un arbre de direction (1) monté tournant autour d'un axe de direction (3) dans un tube-corps (2), ledit tube-corps (2) étant relié à un ensemble support (6) fixé à la structure (10) du véhicule, ladite colonne de direction étant réglable en hauteur et/ou en profondeur, avec un système de serrage (4) suivant un axe de serrage (5), qui est sensiblement perpendiculaire au plan vertical (8) passant par l'axe de direction (3);
- l'ensemble des liaisons entre ledit tube-corps (2) et l'ensemble support (6) est constitué par un mécanisme latéral (7) par rapport au plan vertical (8) de l'axe de direction (3) ;
- ledit mécanisme latéral (7) est monté sur un montant latéral (11) de l'ensemble support ;
- ledit mécanisme latéral (7) comprend :
. un système anti-rotation suivant l'axe de serrage (4),
. un système anti-rotation suivant l'axe de direction (3),
. lesdits deux systèmes anti-rotation permettant d'obtenir une liaison de type encastrement entre le tube-corps (2) et le montant latéral (11) de l'ensemble support (6)), lorsque le système de serrage (4) est en position verrouillée,
**caractérisé en ce que** ledit mécanisme latéral comprend
. un système de réglage du jeu de coulissement suivant l'axe de direction (3) entre le mécanisme latéral (7) et le tube-corps (2) de manière à éviter tout basculement apparent, lorsque le système de serrage (4) est en position déverrouillée,
. ledit système de réglage du jeu étant intégré audit système de serrage (4), et constitué au moyen d'un seul élément de réglage (55, 65) et d'une tête de serrage (53, 63), qui sont montés directement sur la tige de serrage (50, 60), la tête de serrage (53, 63) étant disposée à l'intérieur du tube-corps (2) et l'élément de réglage (55, 65) étant disposé contre un fond 74 aménagé sur la face externe d'une came fixe 71 d'un ensemble de blocage 70 qui s'applique contre la face externe 17 du montant latéral 11, l'élément de réglage (55) ou la tête de serrage (63) étant réglables axialement par rapport à la tige de serrage (50, 60), afin d'ajuster la distance entre l'élément de réglage (55, 65) et la tête de serrage (53, 63) pour obtenir le jeu de coulissement désiré,
. ledit système de réglage du jeu étant commandé par le système de serrage (4), c'est-à-dire en agissant directement sur ledit élément de réglage (55) du côté de la face externe (17), ou en agissant sur la tête de serrage (63) par l'intermédiaire de la tige de serrage (60) du côté de la face externe (17), de manière à avoir un réglage du jeu en position déverrouillée, qui soit complètement indépendant du serrage en position verrouillée effectué à l'aide d'un élément de serrage (56, 66).

2. Dispositif d'ajustement selon la revendication 1, **caractérisé en ce que** le système anti-rotation suivant l'axe de serrage (5) et le système anti-rotation suivant l'axe de direction (3) sont un seul et même système anti-rotation qui consiste en un élément d'appui (40) coopérant avec le tube-corps (2), ledit élément d'appui (40) ayant un profil transversal par rapport à l'axe de direction (3) qui coopère avec un profil conjugué qui est aménagé sur ledit tube-corps (2), l'élément d'appui (40) étant disposé entre le tube-corps (2) et le montant latéral (11), et l'élément d'appui (40) étant relié audit montant latéral (11).

3. Dispositif d'ajustement selon la revendication 2, **caractérisé en ce que** l'élément d'appui (40) comporte deux faces internes d'appui (47, 48) qui sont inclinées l'une par rapport à l'autre, qui sont parallèles à l'axe de direction (3), et qui sont disposées de part et d'autre d'un plan de serrage (9) passant l'axe de serrage (5) et l'axe de direction (3) et perpendiculaire au plan vertical (8) de l'axe de direction (3) ; lesdites faces internes d'appui (47, 48) coopérant respectivement avec deux faces externes de contact (33, 34) ayant un profil conjugué, qui sont aménagées sur le tube-corps (2), lesdites faces externes de contact (33, 34) ayant la même inclinaison par rapport au plan vertical (8) de l'axe de direction (3) que lesdites faces internes d'appui (47, 48), et étant parallèles audit axe de direction (3).

4. Dispositif d'ajustement selon l'une quelconque des revendications 2 et 3, **caractérisé en ce que** le système de serrage (4) comprend :
- une tige de serrage (50, 60) dont l'axe est l'axe de serrage (5), tous les autres éléments du système de serrage (4) sont montés sur ladite tige de serrage (50, 60) qui traverse le tube-corps (2), l'élément d'appui (40), le montant latéral (11) ainsi que tous les autres éléments ;
- un ensemble de blocage (70), qui est disposé contre la face externe (17) du montant latéral (11) ;
- un levier de manoeuvre (75) entraînant en rotation l'ensemble de blocage (70) par rapport à l'axe de serrage (5);
- une équerre de serrage (80), qui est disposée contre les faces internes (29, 30) du tube-corps (2);
- une tête de serrage (53, 63), qui est aménagée à l'extrémité interne (51, 61) de la tige de serrage (50, 60), et qui vient s'appliquer contre l'équerre de serrage (80) ;
- un élément de serrage (56, 66), qui est aménagé à l'extrémité externe (52, 62) de la tige de serrage (50, 60) de manière à bloquer, dans le sens de l'axe de serrage (5), le tube-corps (2) sur le montant latéral (11), lorsque le système de serrage (4) est en position verrouillée.

5. Dispositif d'ajustement selon la revendication 4, **caractérisé en ce que** le système de réglage du jeu de coulissement coopère avec l'ensemble de blocage (70).

6. Dispositif d'ajustement selon la revendication 5, **caractérisé en ce que** :
- l'ensemble de blocage (70) comprend une came fixe (71) en rotation par rapport à l'axe de serrage (5), et une came mobile (72) en rotation par rapport à l'axe de serrage (5) et solidaire du levier de manoeuvre (75) ;
- le système de réglage du jeu de coulissement comprend un élément de réglage monté sur la tige de serrage (50, 60), ledit élément de réglage (55, 65) étant manoeuvrable afin d'ajuster sa position axiale par rapport à la came fixe (71), de manière qu'en position déverrouillée du système de serrage (4), il y ait le jeu demandé entre chacune des deux faces internes d'appui (47, 48) de l'élément d'appui (40) et la face externe de contact (33, 34) correspondante du tube-corps (2).

7. Dispositif d'ajustement selon la revendication 6 d'une colonne de direction réglable en hauteur et en profondeur **caractérisé en ce que** :
- le tube-corps (2) comporte un élément latéral (21) constitué par deux portions inclinées (23, 24) qui sont reliées par une portion de raccordement (27) sensiblement verticale, chaque portion inclinée (23, 24) comporte une face externe (33, 34) qui est la face de contact correspondante, et la portion de raccordement (27) est munie d'un trou oblong de passage (28) de la tige de serrage (50, 60), qui est parallèle à l'axe de direction (3) ;
- l'élément d'appui (40) comporte une portion d'appui (41) sensiblement verticale qui s'applique contre le montant latéral (11), et dont chaque extrémité verticale se termine par une portion inclinée (43, 44) qui comporte une face interne (47, 48) qui est la face d'appui correspondante, ladite portion d'appui (41) ayant un trou de passage (49) de la tige de serrage (50, 60) ;
- le montant latéral (11) comporte un trou oblong de passage (19) de la tige de serrage, qui est sensiblement perpendiculaire au plan de serrage (9) ;
- l'équerre de serrage (80) possède deux faces inclinées (81, 82) qui s'appliquent contre les faces internes (29, 30) des portions inclinées (23, 24) correspondantes du tube-corps (2) ;
- l'équerre de serrage (80) possède une empreinte de forme hexagonale (84), qui coopère avec une forme hexagonale de la tête de serrage (53, 63) pour permettre le blocage en position verrouillée.

8. Dispositif d'ajustement selon la revendication 7, **caractérisé en ce que** :
- la tige de serrage (50) a une tête de serrage (53) intégrée,
- la tige de serrage (50) a une portion externe filetée (54), de manière à recevoir l'élément de réglage qui est constitué par un écrou (55) ou une rondelle se fixant automatiquement qui est réglable en position déverrouillée, et de manière à recevoir l'élément de serrage qui est constitué par un écrou de serrage (56) bloqué en position verrouillée.

9. Dispositif d'ajustement selon la revendication 7, **caractérisé en ce que** :
- la tige de serrage (60) comporte un anneau intégré (65) qui constitue l'élément de réglage ;
- la tige de serrage (60) a une extrémité interne filetée (61) qui reçoit un écrou (63) constituant la tête de serrage ;
- la tige de serrage (60) a une extrémité externe filetée (62) avec une empreinte de manoeuvre (67) agencée transversalement au bout de ladite extrémité (62), ladite empreinte (67) permettant le réglage de la tête de serrage ou écrou (63) par rapport audit anneau (65) en position déverrouillée,
- l'extrémité externe filetée (62) reçoit l'élément de serrage qui est constitué par un écrou de serrage (66) bloqué en position verrouillée.

10. Dispositif d'ajustement selon l'une des revendications 8 et 9, **caractérisé en ce qu'**un ressort (77) est disposé entre l'élément de réglage correspondant (55, 65) et la came fixe (71), afin de supprimer totalement le jeu de fonctionnement avec un effort de réglage contrôlé.

11. Dispositif d'ajustement selon l'une des revendications 8 et 9, **caractérisé en ce qu'**un ressort (78) est disposé entre l'élément de réglage correspondant (55, 65) et la came mobile (72), afin de supprimer totalement le jeu de fonctionnement avec un effort de réglage contrôlé.

## Claims

1. A system for adjusting the position of a motor vehicle steering column, the said steering column being formed by a steering shaft (1) mounted to rotate about a steering axis (3) in a tube body (2), the said tube body (2) being connected to a support assembly (6) fixed to the vehicle structure (10), the said steering column being adjustable in height and/or depth, with a system (4) for clamping along a clamping axis (5) which is substantially perpendicular to the vertical plane (8) extending through the steering axis (3);
- the connection system between the said tube body (2) and the support assembly (6) is formed by a lateral mechanism (7) with respect to the vertical plane (8) of the steering axis (3);
- the said lateral mechanism (7) is mounted on a lateral upright (11) of the support assembly;
- the said lateral mechanism (7) comprises:
- an anti-rotation system along the clamping axis (4),
- an anti-rotation system along the steering axis (3),
. said two anti-rotation systems enabling an embedment type of connection to be obtained between the tube body (2) and the lateral upright (11) of the support assembly (6) when the clamping system (4) is in the locked position;
**characterised in that** said lateral mechanism comprises
. a system for adjusting the sliding clearance along the steering axis (3) between the lateral mechanism (7) and the tube body (2) so as to avoid any apparent rocking when the clamping system (4) is in the unlocked position,
. said clearance adjustment system being integrated in said clamping system (4), and comprising a single adjustment element (55, 65) and a clamping head (53, 63) which are directly mounted on the clamping rod (50, 60), the clamping head (53, 63) being arranged in the tube body (2) and the adjustment element (55, 65) being arranged against a bottom (74) made on the external surface of a fixed cam (71) of a locking assembly (70), which bears against the external surface (17) of the lateral upright (11), the adjustment element (55) or the clamping head (63) being axially adjustable with respect to the clamping rod (50, 60), so as to adjust the distance between the adjustment element (55, 65) and the clamping head (53, 63) to obtain the desired sliding clearance,
said clearance adjustment system being controlled by the clamping system (4), i.e. by directly acting on said adjustment element (55) towards the external surface (17), or by acting on the clamping head (63) through the clamping rod (60) towards the external surface (17), so as to have an clearance adjustment in the unlocked position that is entirely independent of the clamping in the locked position performed by means of a clamping element (56, 66).

2. An adjustment system according to claim 1, **characterised in that** the anti-rotation system along the clamping axis (5) and the anti-rotation system along the steering axis (3) are one and the same anti-rotation system which comprises an abutment element (40) co-operating with the tube body (2), the said abutment element (40) having a transverse profile with respect to the steering axis (3) which co-operates with a conjugate profile which is arranged on the said tube body (2), the abutment element (40) being disposed between the tube body (2) and the lateral upright (11), and the abutment element (40) being connected to the said lateral upright (11).

3. An adjustment system according to claim 2, **characterised in that** the abutment element (40) comprises two inner abutment surfaces (47, 48) which are inclined to one another and which are parallel to the steering axis (3) and which are disposed on either side of a clamping plane (9) extending through the clamping axis (5) and the steering axis (3) and perpendicular to the vertical plane (8) of the steering axis (3); the said inner abutment surfaces (47, 48) co-operating respectively with two outer contact surfaces (33, 34) having a conjugate profile which are arranged on the tube body (2), the said outer contact surfaces (33, 34) having the same inclination to the vertical plane (8) of the steering axis (3) as the said inner abutment surfaces (47, 48) and being parallel to the steering axis (3).

4. An adjustment system according to any one of claims 2 and 3, **characterised in that** the clamping system (4) comprises:
- a clamping rod (50, 60), the axis of which is the clamping axis (5), all the other elements of the clamping system (4) are mounted on the said clamping rod (50, 60) which extends through the tube body (2), the abutment element (4), the lateral upright (11) and all the other elements;
- a locking assembly (70) which is disposed against the outer surface (17) of the lateral upright (11);
- an operating lever (75) which rotates the locking assembly (70) with respect to the clamping axis (5);
- a clamping bracket (80) which is disposed against the inner surfaces (29, 30) of the tube body (2) ;
- a clamping head (53, 63) which is arranged at the inner end (51, 61) of the clamping rod (50, 60) and which is applied against the clamping bracket (80);
- a clamping element (56, 66) which is arranged at the outer end (52, 62) of the clamping rod (50, 60) so as to lock, in the direction of the clamping axis (5), the tube body (2) on the lateral upright (11) when the clamping system (4) is in the locked position.

5. An adjustment system according to claim 4, **characterised in that** the sliding clearance adjustment system co-operates with the locking assembly (70).

6. An adjustment system according to claim 5, **characterised in that**
- the locking assembly (70) comprises a cam (71) which is fixed in rotation with respect to the clamping axis (5) and a cam (72) which is movable in rotation with respect to the clamping axis (5) and connected to the operating lever (75);
- the sliding clearance adjustment system comprises an adjustment element mounted on the clamping rod (50, 60), the said adjustment element (55, 65) being operable so as to adjust its axial position with respect to the fixed cam (71) so that in the unlocked position of the clamping system (4) there is the required clearance between each of the two inner abutment surfaces (47, 48) of the abutment element (40) and the corresponding outer contact surface (33, 34) of the tube body (2).

7. An adjustment system according to claim 6, for a steering column adjustable in height and depth, **characterised in that**:
- the tube body (2) comprises a lateral element (21) formed by two inclined portions (23, 24) which are connected by a substantially vertical connecting portion (27), each inclined portion (23, 24) comprises an outer surface (33, 34) which is the corresponding contact surface, and the connecting portion (27) is provided with an oblong hole (28) for the passage of the clamping rod (50, 60), which is parallel to the steering axis (3);
- the abutment element (40) comprises a substantially vertical abutment portion (41) which is applied against the lateral upright (11), and of which each vertical end terminates in an inclined portion (43, 44) which comprises an inner surface (47, 48) which is the corresponding abutment surface, the said abutment portion (41) having a hole (49) for passage of the clamping rod (50, 60);
- the lateral upright (11) comprises an oblong hole (19) for passage of the clamping rod, which is substantially perpendicular to the clamping plane (9);
- the clamping bracket (80) has two inclined surfaces (81, 82) which are applied against the inner surfaces (29, 30) of the corresponding inclined portions (23, 24) of the tube body (2);
- the clamping bracket (80) has an imprint (84) of hexagonal shape which co-operates with a hexagonal shape of the clamping head (53, 63) to allow locking in the locked position.

8. An adjustment system according to claim 7, **characterised in that**:
- the clamping rod (50) has an integrated clamping head (53),
- the clamping rod (50) has an outer screwthreaded portion (54) so as to receive the adjustment element which is in the form of an automatically fixing nut (55) or washer which is adjustable in the unlocked position, and so as to receive the clamping element which is in the form of a clamping nut (56) locked in the locked position.

9. An adjustment system according to claim 7, **characterised in that**
- the clamping rod (60) comprises an integrated ring (65) which forms the adjustment element;
- the clamping rod (60) has a screwthreaded inner end (61) which receives a nut (63) forming the clamping head;
- the clamping head (60) has an outer screwthreaded end (62) with an operating imprint (67) arranged transversely at the end of the said end (62), the said imprint (67) allowing adjustment of the clamping head or nut (63) with respect to the ring (65) in the unlocked position,
- the screwthreaded outer end (62) receives the clamping element which is in the form of a clamping nut (66) locked in the locked position.

10. An adjustment system according to any one of claims 8 and 9, **characterised in that** a spring (77) is disposed between the corresponding adjustment element (55, 65) and the fixed cam (71) so as completely to eliminate the operating play with a controlled adjustment force.

11. An adjustment system according to any one of claims 8 and 9, **characterised in that** a spring (78) is disposed between the corresponding adjustment element (55, 65) and the movable cam (72) so as completely to eliminate the operating clearance with a controlled adjustment force.

## Patentansprüche

1. Vorrichtung zur Ausrichtung der Position einer Lenksäule eines Kraftfahrzeugs, wobei die genannte Lenksäule aus einer Lenkspindel (1) besteht, die um eine Lenkachse (3) drehbar in einem Lenkrohr (2) angebracht ist, wobei das genannte Lenkrohr (2) mit einer Trägereinheit (6) verbunden ist, die an der Karosserie (10) des Fahrzeugs befestigt ist, und wobei die genannte Lenksäule in Höhe und/oder Tiefe verstellbar ist, mit einem Feststellsystem (4) entlang einer Feststellachse (5), die genau senkrecht zur vertikalen Ebene (8) durch die Lenkachse (3) verläuft;
- die Verbindungseinheit zwischen dem genannten Lenkrohr (2) und der Trägereinheit (6) wird von einem in Bezug auf die vertikale Ebene (8) der Lenkachse (3) seitlich angeordneten Mechanismus (7) gebildet;
- der genannte seitliche Mechanismus (7) ist an einer Seitenstrebe (11) der Trägereinheit befestigt;
- der genannte seitliche Mechanismus (7) umfasst Folgendes:
- ein Gegendrehsystem entlang der Feststellachse (4),
- ein Gegendrehsystem entlang der Lenkachse (3),
- wobei die beiden genannten Gegendrehsysteme eine Verbindung durch feste Einspannung zwischen dem Lenkrohr (2) und der Seitenstrebe (11) der Trägereinheit (6) ermöglichen, wenn sich das Feststellsystem (4) in gesicherter Position befindet;
**dadurch gekennzeichnet, dass** der genannte seitliche Mechanismus Folgendes umfasst:
- ein System zum Verstellen des Gleitzwischenraumes entlang der Lenkachse (3) zwischen dem seitlichen Mechanismus (7) und dem Lenkrohr (2), derart, dass jegliches offensichtliche Wackeln vermieden wird, wenn sich das Feststellsystem (4) in entsicherter Position befindet,
- wobei das genannte System zum Verstellen des Zwischenraums in das besagte Feststellsystem (4) integriert ist und aus einem einzigen Stellelement (55, 65) und einem Feststellkopf (53, 63), die direkt auf der Feststellstange (50, 60) montiert sind, besteht, der Feststellkopf (53, 63) im Innern des Lenkrohrs (2) angeordnet ist und das Stellelement (55, 65) gegen einen auf der Außenseite ausgeformten Boden (74) einer feststehenden Nocke (71) einer Arretiereinheit (70) angeordnet ist, die an der Außenfläche 17 der seitlichen Strebe 11 anliegt, und das Stellelement (55) oder der Feststellkopf (63) gegenüber dem Feststellbolzen (50, 60) axial verstellbar sind, um den Abstand zwischen dem Stellelement (55, 65) und dem Feststellkopf (53, 63) anpassen zu können, mit dem Ziel, den gewünschten Gleitzwischenraum zu erhalten,
- wobei das genannte System zum Verstellen des Gleitspielzwischenraums durch das Feststellsystem (4) betätigt wird, d.h. indem es direkt auf das Stellelement (55) auf der Außenseite (17) oder - über den Feststellbolzen (60) - auf den Feststellkopf (63) auf der Außenseite (17) einwirkt, so dass man eine Einstellung des Gleitzwischenraums in der entsicherten Position erhält, die von der Feststellung in der gesicherten Position, vorgenommen mittels eines Feststellelements (56, 66), völlig unabhängig ist.

2. Ausrichtvorrichtung nach Anspruch 1, **dadurch gekennzeichnet, dass** das Gegendrehsystem entlang der Feststellachse (5) und das Gegendrehsystem entlang der Lenkachse (3) ein und dasselbe Gegendrehsystem ist, das aus einem Stützelement (40) besteht, das mit dem Lenkrohr zusammenwirkt, wobei das genannte Stützelement (40) ein in Bezug auf die Lenkachse (3) quer verlaufendes Profil aufweist, das mit einem zugehörigen Profil zusammenwirkt, das an dem genannten Lenkrohr (2) angebracht ist, und wobei das Stützelement (40) zwischen dem Lenkrohr (2) und der Seitenstrebe (11) angeordnet ist und das Stützelement (40) mit der genannten Seitenstrebe (11) verbunden ist.

3. Ausrichtvorrichtung nach Anspruch 2, **dadurch gekennzeichnet, dass** das Stützelement (40) zwei innere Stützflächen (47, 48) aufweist, die in Bezug aufeinander geneigt sind, die parallel zur Lenkachse (3) verlaufen und die beidseitig einer Feststellebene (9) angeordnet sind, die entlang der Feststellachse (5) und der Lenkachse (3) und senkrecht zur vertikalen Ebene (8) der Lenkachse (3) verläuft; wobei die genannten inneren Stützflächen (47, 48) jeweils mit zwei äußeren Kontaktflächen (33, 34) zusammenwirken, die ein zugehöriges Profil aufweisen und am Lenkrohr (2) angeordnet sind, wobei die genannten äußeren Kontaktflächen (33, 34) die gleiche Neigung in Bezug auf die vertikale Ebene (8) der Lenkachse (3) aufweisen wie die genannten inneren Stützflächen (47, 48) und parallel zur genannten Lenkachse (3) verlaufen.

4. Ausrichtvorrichtung nach einem der Ansprüche 2 und 3, **dadurch gekennzeichnet, dass** das Feststellsystem (4) Folgendes aufweist:
- eine Feststellstange (50, 60), deren Achse der Feststellachse (5) entspricht, wobei alle weiteren Elemente des Feststellsystems (4) an der genannten Feststellstange (50, 60) angebracht sind, die durch das Lenkrohr (2), das Stützelement (40), die Seitenstrebe (11) sowie durch alle weiteren Elemente verläuft;
- eine Arretiereinheit (70), die an der Außenfläche (17) der Seitenstrebe (11) anliegt;
- einen Betätigungshebel (75), der die Arretiereinheit (70) in Bezug auf die Feststellachse (5) in Drehung versetzt;
- einen Feststellwinkel (80), der zwischen den Innenflächen (29, 30) des Lenkrohrs (2) angeordnet ist;
- einen Feststellkopf (53, 63), der am inneren Ende (51, 61) der Feststellstange (50, 60) angeordnet ist und der in Kontakt mit dem Feststellwinkel (80) gebracht wird;
- ein Feststellelement (56, 66), das derart am äußeren Ende (52, 62) der Feststellstange (50, 60) angeordnet ist, dass es in Richtung der Feststellachse (5) das Lenkrohr (2) auf der Seitenstrebe (11) arretiert, wenn sich das Feststellsystem (4) in gesicherter Position befindet.

5. Ausrichtvorrichtung nach Anspruch 4, **dadurch gekennzeichnet, dass** das System zum Verstellen des Gleitzwischenraums mit der Arretiereinheit (70) zusammenwirkt.

6. Ausrichtvorrichtung nach Anspruch 5, **dadurch gekennzeichnet, dass**:
- die Arretiereinheit (70) eine ortsfeste Nockenscheibe (71) aufweist, die in Bezug auf die Feststellachse (5) drehbar ist, sowie eine bewegliche Nockenscheibe (72), die um die Feststellachse (5) drehbar und fest mit dem Betätigungshebel (75) verbunden ist;
- das System zum Verstellen des Gleitzwischenraumes ein Stellelement aufweist, das an der Feststellstange (50, 60) angebracht ist, wobei das genannte Stellelement (55, 65) zur Ausrichtung seiner axialen Position in Bezug auf die ortsfeste Nockenscheibe (71) betätigt werden kann, und zwar derart, dass in der gesicherten Position des Feststellsystems (4) zwischen den beiden inneren Stützflächen (47, 48) des Stützelements (40) und den entsprechenden äußeren Kontaktflächen (33, 34) des Lenkrohrs (2) der gewünschte Abstand eingestellt werden kann.

7. Vorrichtung nach Anspruch 6 zur Ausrichtung einer in Höhe und Tiefe verstellbaren Lenksäule, **dadurch gekennzeichnet, dass**:
- das Lenkrohr (2) ein Seitenelement (21) aufweist, das aus zwei geneigten Abschnitten (23, 24) besteht, die durch einen genau senkrecht verlaufenden Verbindungsabschnitt (27) verbunden sind, wobei jeder geneigte Abschnitt (23, 24) eine Außenfläche (33, 34) aufweist, die die jeweilige Kontaktfläche darstellt, und der Verbindungsabschnitt (27) eine längliche Durchgangsöffnung (28) für die Feststellstange (50, 60) aufweist, die parallel zur Lenkachse (3) verläuft;
- das Stützelement (40) einen genau senkrechten Stützabschnitt (41) aufweist, der an der Seitenstrebe (11) anliegt und dessen senkrechte Enden mit einem geneigten Abschnitt (43, 44) enden, der eine Innenfläche (47, 48) aufweist, die die entsprechende Stützfläche darstellt, wobei der genannte Stützabschnitt (41) eine Durchgangsöffnung (49) für die Feststellstange (50, 60) aufweist;
- die Seitenstrebe (11) eine längliche Durchgangsöffnung (19) für die Feststellstange aufweist, die genau senkrecht zur Feststellebene (9) verläuft;
- der Feststellwinkel (80) zwei geneigte Flächen (81, 82) aufweist, die an den Innenflächen (29, 30) der entsprechenden geneigten Abschnitte (23, 24) des Lenkrohrs (2) anliegen;
- der Feststellwinkel (80) eine sechseckige Vertiefung (84) aufweist, die zur Ermöglichung der Arretierung in der gesicherten Position mit der sechseckigen Form des Feststellkopfes (53, 63) zusammenwirkt.

8. Ausrichtvorrichtung nach Anspruch 7, **dadurch gekennzeichnet, dass**:
- die Feststellstange (50) einen integrierten Feststellkopf (53) aufweist,
- die Feststellstange (50) einen äußeren Abschnitt mit Gewinde (54) aufweist, und zwar derart, dass er das Stellelement aufnehmen kann, das aus einer Mutter (55) oder einer Scheibe besteht, die sich automatisch befestigt und die in entsicherter Position verstellbar ist, und derart, dass er das Feststellelement aufnehmen kann, das aus einer Feststellmutter (56) besteht, die in gesicherter Position arretiert ist.

9. Ausrichtvorrichtung nach Anspruch 7, **dadurch gekennzeichnet, dass**:
- die Feststellstange (60) einen integrierten Ring (65) aufweist, der das Stellelement darstellt;
- die Feststellstange (60) ein inneres Ende mit Gewinde (61) aufweist, das eine Mutter (63) aufnimmt, die den Feststellkopf darstellt;
- die Feststellstange (60) ein äußeres Ende mit Gewinde (62) mit einer Vertiefung zur Betätigung (67) aufweist, die quer zur Spitze des genannten Endes (62) verläuft, wobei die genannte Vertiefung (67) in der entsicherten Stellung das Verstellen des Feststellkopfes oder der Mutter (63) in Bezug auf den genannten Ring (65) ermöglicht,
- das äußere Ende mit Gewinde (62) das Feststellelement aufnimmt, das aus einer in der gesicherten Position arretierten Feststellmutter (66) besteht.

10. Ausrichtvorrichtung nach einem der Ansprüche 8 und 9, **dadurch gekennzeichnet, dass** zwischen dem entsprechenden Stellelement (55, 65) und der ortsfesten Nockenscheibe (71) zur vollständigen Unterdrückung des Funktionszwischenraums mit einer kontrollierten Stellkraft eine Feder (77) angeordnet ist.

11. Ausrichtvorrichtung nach einem der Ansprüche 8 und 9, **dadurch gekennzeichnet, dass** zwischen dem entsprechenden Stellelement (55, 65) und der beweglichen Nockenscheibe (72) zur vollständigen Unterdrückung des Funktionszwischenraums mit einer kontrollierten Stellkraft eine Feder (78) angeordnet ist.
